# EUROPÄISCHE PATENTSCHRIFT

(11) **EP 0 915 793 B1**
(45) Veröffentlichungstag und Bekanntmachung des Hinweises auf die Patenterteilung: **03.04.2002**
(21) Anmeldenummer: 97942850.5
(22) Anmeldetag: 06.08.1997
(51) Int. Cl.: B60T 17/22, B60T 8/42, B60T 11/30

(54) **HYDRAULISCHE KRAFTFAHRZEUGBREMSANLAGE MIT RADSCHLUPFREGELUNG**
HYDRAULIC MOTOR VEHICLE BRAKING SYSTEM WITH WHEEL SLIP REGULATION
SYSTEME DE FREINAGE HYDRAULIQUE POUR AUTOMOBILE A REGULATION ANTIPATINAGE

(30) Priorität: 09.08.1996 DE 19632158
(43) Veröffentlichungstag der Anmeldung: 19.05.1999
(73) Patentinhaber: Continental Teves AG & Co. oHG, 60488 Frankfurt (DE)
(72) Erfinder: VOLZ, Peter, D-64291 Darmstadt (DE); GEISSINGER, Jürgen, D-73655 Plüderhausen (DE)
(74) Vertreter: Blum, Klaus-Dieter
(86) Internationale Anmeldenummer: EP9704290
(87) Internationale Veröffentlichungsnummer: WO9806615

(56) Entgegenhaltungen:
- EP-A- 0 196 808
- DE-A- 4 121 278
- DE-A- 4 337 133

## Beschreibung

Die Erfindung betrifft eine hydraulische Kraftfahrzeugbremsanlage mit Radschlupfregelung nach dem Oberbegriff des Patentanspruchs 1.

Aus der DE 43 37 133 A1 ist bereits eine hydraulische Kraftfahrzeugbremsanlage mit Radschlupfregelung hervorgegangen, bei der in der Blockierschutzeinrichtung und/oder Antriebsschlupfregeleinrichtung je Bremskreis mindestens ein Rückschlagventil verwendet wird, dessen Ventilsitz beim Evakuieren der Bremsanlage vom Schließkörper des Rückschlagventils nicht abgeschlossen ist. Durch diese Maßnahme soll erreicht werden, daß der Ventilsitz vor und bei dem Befüllen des Systems im drucklosem Zustand des Aggregats einen ungehinderten Druckmitteldurchlaß ermöglicht. Durch das offene Rückschlagventil besteht somit eine Verbindung zwischen dem Primär- und dem Sekundärkreis, wodurch jeweils der Sekundärkreis evakuiert und mit Bremsflüssigkeit gefüllt werden kann, ohne daß jeweils das stromlos geschlossene Magnetventil angesteuert werden muß. Als Schließkörper weist das Rückschlagventil eine federlose Kugel auf, so daß bei einem Druckaufbau im Aggregat anläßlich einer Bremsung entsprechend große Strömungskräfte auf das Rückschlagventil einwirken müssen, damit der als Kugel ausgebildete Schließkörper mitgerissen und auf den Ventilsitz gepreßt wird. Eine andere Bauart des Kugelrückschlagventils sieht vor, daß die Kugel durch Schwerkraftwirkung auf ihren Ventilsitz gepreßt werden soll. Diese Überlegungen sind jedoch im wesentlichen theoretischer Natur, so daß unter Umständen im Praxisfall nicht gewährleistet ist, daß die durch Strömungskräfte bzw. durch Schwerkraft zu bewerkstelligende Schließbewegung des Kugelrückschlagventils sicher zustande kommt. Infolge der hohen Dichtigkeitsanforderung an das Rückschlagventil, die mit der Dichtigkeitsanforderung eines in den Auslaß zur Radbremse geschalteten, in der Grundstellung geschlossenen Druckmodulationsventils vergleichbar ist, ist in jedem Falle ein absolut sicheres Schließen des Rückschlagventils sicherzustellen. Eine leckagefreie Schließfunktion von metallischen Kugeischließkörpern der vorgenannten Art ist jedoch bekanntlich nicht generell gewährleistet.

Daher ist es die Aufgabe der Erfindung, eine hydraulische Kraftfahrzeugbremsanlage mit Radschlupfregelung der eingangs genannten Art, die nach dem Rückförderprinzip arbeitet, dahingehend zu verbessern, daß mit einfachen Mitteln ein kostengünstiger, funktionssicherer, insbesondere leckagefreier Schließkörper zwecks Evakuierung des Sekundärkreises zustande kommt.

Diese Aufgabe wird erfindungsgemäß für eine hydraulische Kraftfahrzeugbremsanlage der angegebenen Gattung durch die kennzeichnenden Merkmale des Patentanspruchs 1 gelöst.

Weitere Merkmale und Vorteile der Erfindung gehen nachfolgend anhand der Beschreibung mehrerer Ausführungsbeispiele hervor.

Es zeigen:
- Fig. 1: einen ersten Hydraulikschaltplan für eine Kraftfahrzeugbremsanlage mit Radschlupfregelung, mit verschiedenen Anschlußmöglichkeiten des Schließkörpers zwischen dem Primär- und Sekundärkreis,
- Fig. 2: einen weiteren Hydraulikschaltplan für eine Kraftfahrzeugbremsanlage mit Radschlupfregelung und automatischem Bremseneingriff, wozu weitere Positionsmöglichkeiten für den Schließkörper vorgeschlagen werden,
- Fig. 3: ein konstruktives Anordnungs- und Ausführungsbeispiel des erfindungsgemäßen Schließkörpers in einem Ventilblockaggregat,
- Fig. 4: ein Befestigungsbeispiel des Schließkörpers im Ventilblockaggregat mittels einer vom Druckmodulationsventil ausgeübten Haltefunktion,
- Fig. 5: die Anordnung des Schließkörpers an einer im Ventilblockaggregat befestigten Ventilpatrone.

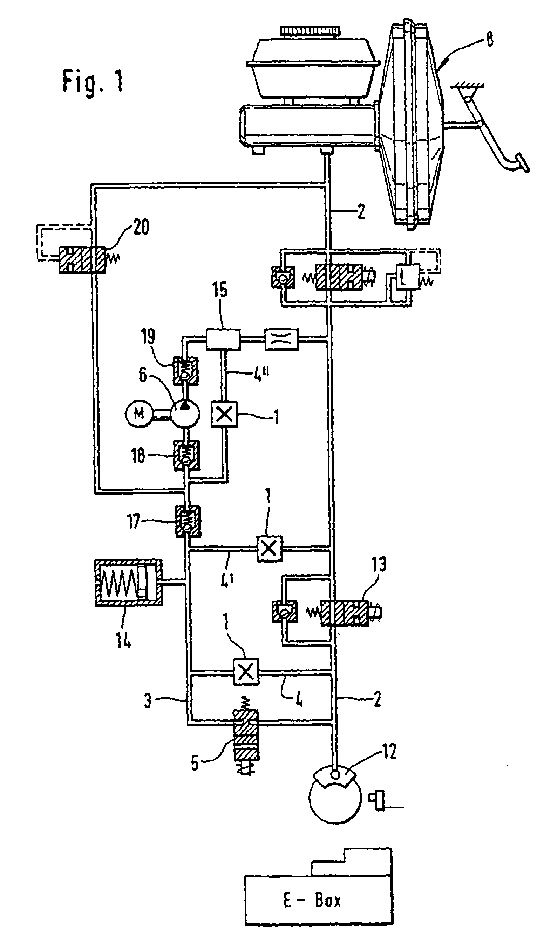

Die Fig. 1 zeigt den Hydraulikschaltplan für eine hydraulische Kraftfahrzeugbremsanlage mit Radschlupfregelung, die nach dem Rückförderprinzip arbeitet. Ein an einem Bremsdruckgeber 8 angeschlossener Bremsdruckpfad führt zu einer Radbremse 12. Stromaufwärts zur Radbremse 12 ist in den Bremsdruckpfad ein in der Grundstellung elektromagnetisch nicht erregtes, offenes Druckmodulationsventil 13 eingesetzt. Dieser hydraulische Abschnitt der Bremsanlage soll im nachfolgenden mit dem Begriff Primärkreis bezeichnet werden und ist mit dem Bezugszeichen 2 versehen.

Zwischen dem in der Grundstellung geöffneten Druckmodulationsventil 13 und der Radbremse 12 ist in den Bremsdruckpfad ein in der Grundstellung geschlossenes Druckmodulationsventil 5 geschaltet, das bei Bedarf mit einem Saugpfad einer Pumpe 6 in Verbindung steht. In einem ersten Ausführungsbeispiel der Erfindung ist zwischen dem Saugpfad und dem stromabwärts zum in Grundstellung geöffneten Druckmodulationsventil 13 am Primärkreis 2 ein Bypasskanal 4 angeschlossen, der den erfindungsgemäßen Schließkörper 1 aufnimmt. Zwischen dem Anschluß des Bypasskanals 4 an den Saugpfad der Pumpe 6 und einem Rückschlagventil 17 befindet sich im Nebenschluß des Saugpfades ein Niederdruckspeicher 14. Der von dem in der Grundstellung geschlossenen Druckmodulationsventil 5 zur Pumpe 6 führende Saugpfad wird im nachfolgenden mit dem Begriff Sekundärkreis bezeichnet und trägt das Bezugszeichen 3.

Die Pumpe 6 ist sowohl mit einem schematisch skizzierten Saug- als auch Druckventil 18,19 versehen. Diese steht über eine stromabwärts ihr nachgeschaltete Geräuschdämpfungseinrichtung 15 mit dem Primärkreis 2 in Verbindung.

Zum Zwecke einer elektronischen Traktionskontrolle verfügt die Kraftfahrzeugbremsanlage über einen unmittelbar am Bremsdruckgeber 8 und damit am Primärkreis 2 angeschlossenen weiteren Saugpfad, in den ein hydraulisch umschaltbares 2/2-Wegeventil 20 integriert ist, das normalerweise bei Betätigung des Bremsdruckgebers 8 in seiner Sperrstellung verharrt. Stromabwärts zu diesem 2/2-Wegeventil 20 mündet dieser Saugpfad zwischen dem der Pumpe 6 vorgeschalteten Saugventil 18 und dem zum Druckmodulationsventil 5 nachgeschalteten Rückschlagventil 17 in den Sekundärkreis 2 ein. Da der vorbeschriebene Abschnitt des Saugpfades in der Betriebslösestellung permanent mit dem Primärkreis 2 in Verbindung steht, bedarf es keiner zusätzlichen Entlüftungsmaßnahmen, um den Abschnitt des Saugpfades zwischen dem Saugventil 18 und dem Rückschlagventil 17 zu evakuieren.

Eine alternative Anordnung des Schließkörpers 1 ergibt sich durch den gleichfalls in Fig. 1 stromaufwärts zum Druckmodulationsventil 13 am Primärkreis angeschlossenen Bypasskanal 4', der stromaufwärts zum Rückschlagventil 17 in den Sekundärkreis 3 einmündet. Damit ergeben sich für die Evakuierung des Sekundärkreises 3 zwei Anschlußmöglichkeiten für den Schließkörper 1 zum Zwecke der Überbrückung des in der Grundstellung geschlossenen Druckmodulationsventils 5.

Ferner schlägt die Erfindung vor, daß bei Bedarf ein mit einem Schließkörper 1 versehener Bypasskanal 4'' an einer Kammer der Geräuschdämpfungseinrichtung 15 und unmittelbar vor dem Saugventil 18 am Sekundärkreis 3 angeschlossen ist. Dies ermöglicht eine Evakuierung des Sekundärkreises 3 über den mit dem 2/2-Wegeventil 20 versehenen Saugpfad als auch gleichzeitig eine Evakuierung der dem Pumpendruckventil nachgeschalteten, relativ voluminösen Geräuschdämpfungseinrichtung 15, da infolge einer relativ kleinen, der Dämpfungskammer nachgeschalteten Drossel die rasche Evakuierung der Kammer nur begrenzt möglich ist. Bei vorliegender hydraulischer Schaltung nach Fig. 1 ergibt sich erfindungsgemäß eine überaus schnelle Evakuierung der Geräuschdämpfungseinrichtung über die Drossel als auch über den unmittelbar am Bremsdruckgeber 8 angeschlossenen Saugpfad in Richtung des Primärkreises 2.

Sofern auf eine Regelung des Antriebsschlupfes und damit auf die Anordnung des unmittelbar an den Primärkreis 2 angeschlossenen Pumpensaugpfades und des Rückschlagventiles 17 verzichtet würde, käme dem vor dem Pumpensaugventil 18 und an der Geräuschdämpfungseinrichtung 15 angeschlossenen Bypasskanal 4'' ausschließlich eine Evakuierungsfunktion für ein Antiblockiersystem über die Drossel der Geräuschdämpfungseinrichtung 15 zu. Eine hinreichend schnelle und umfassende Entlüftung des Sekundärkreises 3 ist somit anhand der in Fig. 1 dargestellten drei Anordnungsbeispiele für den zunächst offenen Schließkörper 1 innerhalb einer jeden Bypasskanal-Anordnung verdeutlicht.

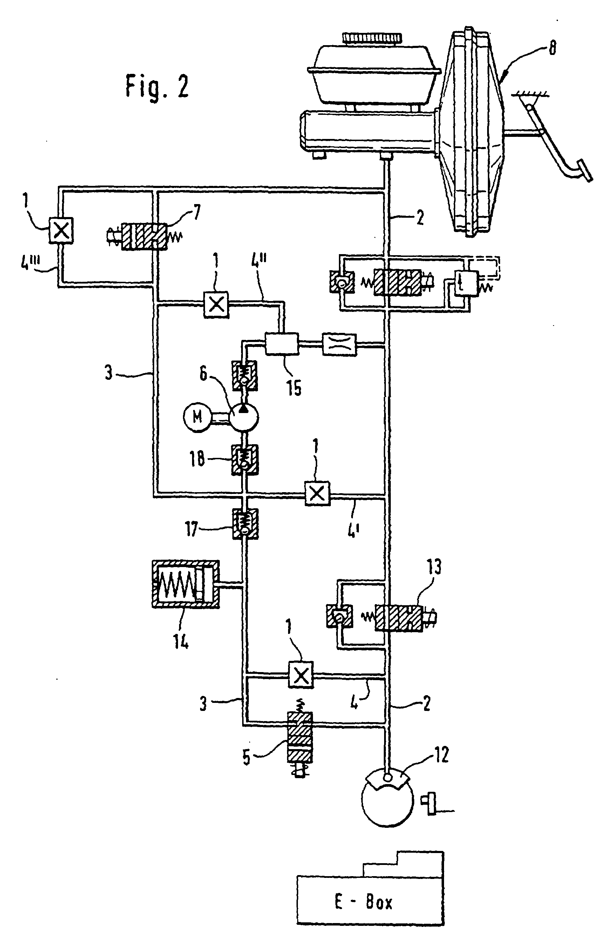

Die Fig. 2 zeigt in Ergänzung zur Schaltungsanordnung nach Fig. 1 eine Erweiterung der Bremsanlage zum Zwecke eines automatischen Bremseneingriffs mittels elektrisch ansteuerbarem Bremsdruckgeber 8. Damit unterscheidet sich die Bremsanlage nach Fig. 2 im wesentlichen durch den Ersatz des aus Fig. 1 bekannten 2/2-Wegeventils 20 durch ein elektromagnetisch betätigbares, in der Grundstellung geschlossenes Druckmodulationsventil 7, das den aus Fig. 1 bekannten Sekundärkreis 3 um den zwischen dem Druckmodulationsventil 7 und den beiden Rückschlagventilen 17,18 angeschlossenen Saugpfad erweitert. Dies führt dazu, daß entweder zwischen dem Rückschlagventil 17 und dem Pumpensaugventil 18 des Sekundärkreises 3 oder parallel zum Druckmodulationsventil 7 jeweils ein Bypasskanal 4'', 4''' mit jeweils einem Schließkörper 1 angeordnet ist, der während des Evakuiervorganges eine Druckmittelverbindung zum Primärkreis 2 herstellt.

Darüber hinaus ist es möglich, bei Bedarf über beide Bypasskanäle 4'', 4''' den in Richtung des Druckmodulationsventils 7 erweiterten Sekundärkreis 3 an den Primärkreis 2 anzuschließen. Damit läßt sich die Rückförderpumpe 6 zur Evakuierung des Sekundärkreises 3 umgehen und es läßt sich ohne elektromagnetische Betätigung des Druckmodulationsventils 7 der zwischen dem Rückschlagventil 17 und dem Pumpensaugventil 18 einmündende Saugpfad evakuieren. Bei Verwendung beider Bypasskanäle 4'',4''' ergibt sich eine doppelflutige Evakuierungswirkung für die voluminöse Dämpferkammer der Dämpfungeinrichtung 15 mit kleinstem Zeitaufwand.

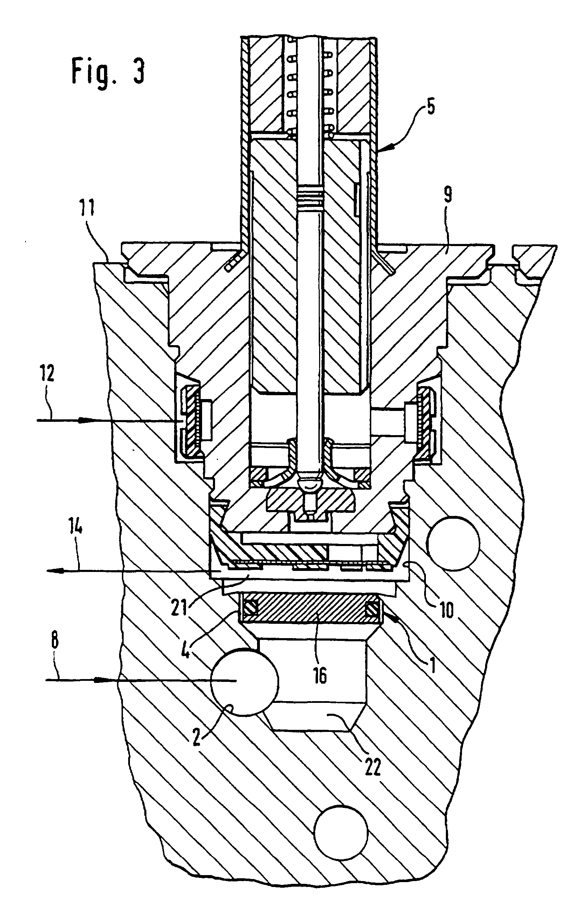

In Bezugnahme auf vorgenannte Schaltungskonzepte als auch hiervon losgelöst, gehen vorteilhafte Anordnungs- und Ausführungsmöglichkeiten des erfindungsgemäßen Schließkörpers 1 im nachfolgenden aus den Schnittzeichnungen von Fig. 3 bis 5 hervor.

Die Fig. 3 zeigt einen Querschnitt durch ein Ventilblockaggregat 11 für eine hydraulische Kraftfahrzeugbremsanlage mit Radschlupfregelung, die nach dem Rückförderprinzip arbeitet. In der Schnittdarstellung des Ventilblockaggregates 11 ist eine als Sackbohrung ausgeführte Stufenbohrung 10 zu erkennen, die von außen mittels eines in einer Ventilpatrone 9 verstemmt gehaltenen Druckmodulationsventils 5 verschlossen ist. Unterhalb der Ventilpatrone 9 befindet sich eine Bohrungsstufe, in der der Schließkörper 1 befestigt ist. Der zwischen der Ventilpatrone 9 und dem Schließkörper 1 vorgesehene Hohlraum 21 führt zur Saugseite der Rückförderpumpe 6 und ist somit Bestandteil des Sekundärkreises 3. Hingegen ist der von der Ventilpatrone 9 abgewandte, unterhalb des Schließkörpers 1 angeordnete Hohlraum 22 mit dem Bremsdruckgeber 8 und damit mit dem Primärkreis 2 verbunden. Der Schließkörper 1 besteht im vorliegenden Ausführungsbeispiel aus einer Radialdichtung, die in einer Ringnut eines scheibenförmigen Haltekörpers 16 geführt ist. Der Haltekörper 16 ist vorzugsweise mittels eines Verstemmwerkzeuges im Bereich der Bohrungsstufe befestigt. Diese Verstemmung ist an der Peripherie des Haltekörpers 16 nur partiell ausgeführt, so daß zwischen der Berandung des Haltekörpers 16 und dem partiellen Verstemmbereich im Ventilblockaggregat 11 ein Luftspalt besteht, der in der Funktion eines Bypasskanals 4 so lange eine Verbindung zwischen dem Primärkreis 2 und dem Sekundärkreis 3 ermöglicht, bis unter Einwirkung von Bremsflüssigkeit eine Formänderung, vorzugsweise eine Volumenzunahme des elastomeren Schließkörpers 1 erfolgt. Mit der Zufuhr von Bremsflüssigkeit in den Primärkreis 2 gelangt die Bremsflüssigkeit nicht nur in den unterhalb des Schließkörpers 1 gelegenen Hohlraum 22, sondern auch über den splatförmigen Bypasskanal 4 in den Sekundärkreis 3 und benetzt den Schließkörper 1 infolge der Spaltwirkung zwischen dem Halteteil 16 und der Wandung des Ventilblockaggregates 11. Der aus einem Quellwerkstoff, vorzugsweise aus einem Elastomer bestehende Schließkörper 1 verschließt durch sein Quellverhalten den Spalt und damit den Bypasskanal 4. Durch das Quellverhalten des Schließkörpers 1 wird ein Kurzschlußstrom zwischen Primär- und Sekundärkreis 2,3 verhindert, so daß nach Öffnen des in Grundstellung normalerweise geschlossenen Druckmodulationsventils 5 das von der Radbremse 12 kommende Druckmittel ausschließlich in den unterhalb der Ventilpatrone 9 gelegenen Hohlraum 21 gelangt, der als Bestandteil des Sekundärkreises 3 mit dem Saugpfad der Rückförderpumpe 6 in Verbindung steht. Das unterhalb des Haltekörpers 16 im Hohlraum 22 des Primärkreises 2 anstehende Druckmittel vom Bremsdruckgeber 8 verharrt somit isoliert vom Sekundärkreis 3 bei betriebsfähiger Bremse.

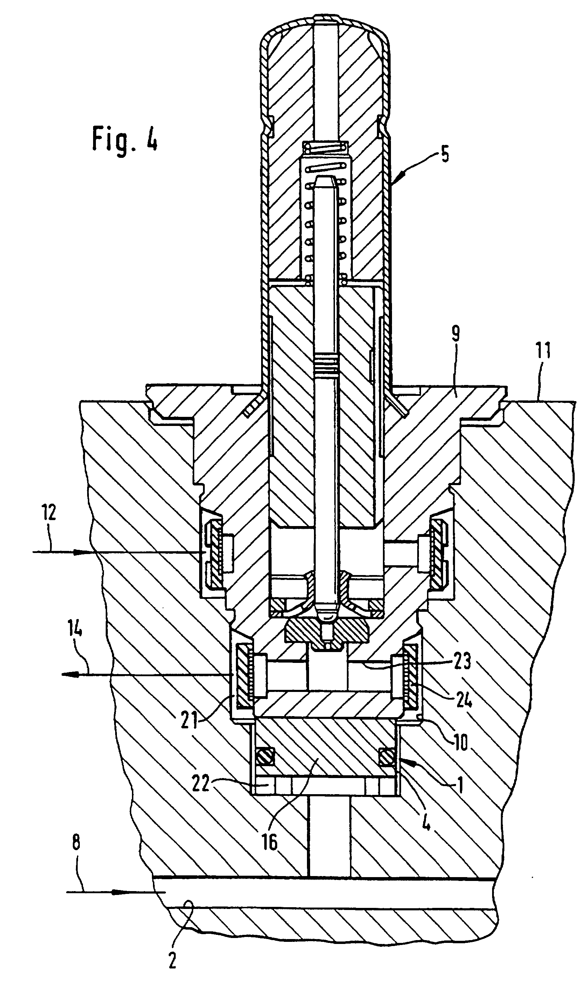

Die Fig. 4 zeigt alternativ zur verstemmten Befestigung des Haltekörpers 16 gemäß der voranbeschriebenen Ausführungsform nunmehr ausschließlich eine mittels Selbstverstemmung druckmitteldichte, feste Einscherung der Ventilpatrone 9 im Ventilblockaggregat 11. Die vom Primärkreis 2 auf die untere Stirnfläche des Haltekörpers 16 ausgeübte Druckkraft wird von der in den Hohlraum 21 des Primärkreises 3 gerichtete Stirnfläche der Ventilpatrone 9 aufgenommen. Zu diesem Zweck weist die Ventilpatrone 9 einen in Richtung des Haltekörpers 16 verlängerten Schaft auf, der mit einer Querbohrung 23 und einem Ringfilter 24 versehen ist. Der konstruktive Aufbau des Haltekörpers 16 als auch des Schließkörpers 1 entspricht in allen wesentlichen Einzelheiten dem beschriebenen Gegenstand nach Fig. 3. Hierbei ist zu beachten, daß gemäß der Ausführungsform nach Fig. 4 der Haltekörper 16 radialspielbehaftet in der Stufenbohrung 10 eingesetzt ist, um zum Evakuieren des sich in den Hohlraum 21 erstreckenden Sekundärkreises 3 eine zunächst permanent bestehende Vakuumverbindung zum unterhalb des Haltekörpers 16 befindlichen Primärkreises 2 zu gewährleisten. Im vorliegenden Ausführungsbeispiel nach Fig. 4 mündet der vom Bremsdruckgeber 8 als Primärkreis 2 ausgewiesene Kanal in koaxialer Anordnung mit der Symmetrieachse des Druckmodulationsventils 5 und des Haltekörpers 16 in den Endabschnitt der Stufenbohrung 10 ein, der nach Fig. 3 dem Hohlraum 22 entspricht. Am Kanal des Primärkreises 2 anstehendes Vakuum kann sich somit ungehindert über den unterhalb des Haltekörpers 16 bestehenden Hohlraum 22 und über den als Bypasskanal 4 wirksamen Ringspalt zwischen Haltekörper 16 und Schließkörper 1 in den am Sekundärkreis 3 angeschlossenen Hohlraum 22 ausbreiten. Beim Befüllen des Primärkreises 2 mit Bremsflüssigkeit kommt es gleichfalls, wie zuvor in den Ausführungsbeispielen beschrieben, zu einem Benetzen und Aufquellen des Schließkörpers 1, bis dieser flüssigkeitsdicht den ursprünglich bestehenden Ringspalt in der Stufenbohrung 10 verschließt.

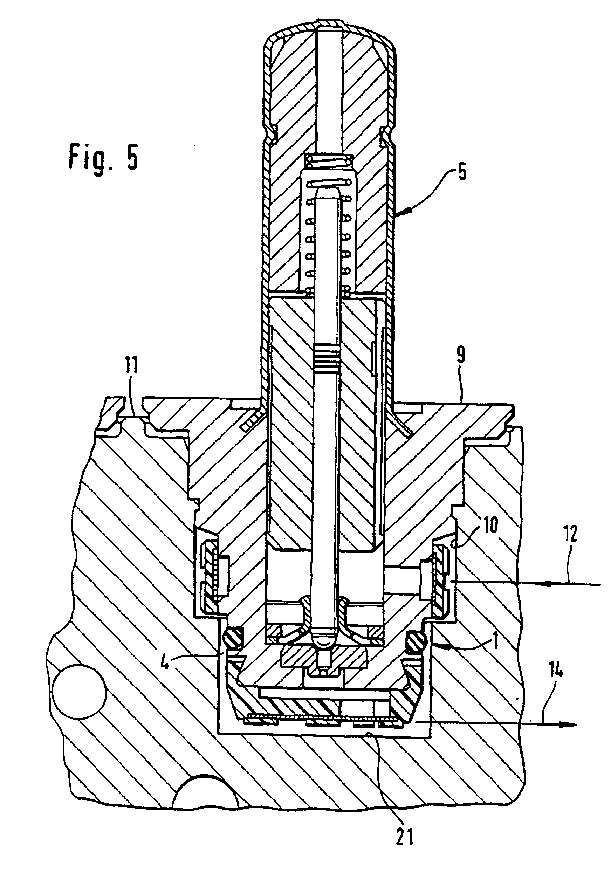

In Fig. 5 wird eine unmittelbare Befestigung des Schließkörpers 1 an der Ventilpatrone 9 des Druckmodulationsventils 5 vorgeschlagen, die sich dadurch auszeichnet, daß ohne aufwendige Veränderungen am verjüngten Abschnitt der Ventilpatrone 9 eine Ringnut zur Aufnahme des Schließkörpers 1 eingelassen ist, womit die Ventilpatrone 9 gleichzeitig die aus den voran beschriebenen Fig. 3 und 4 dargestellte Haltekörperfunktion mit übernimmt. Dies führt hinsichtlich der Befestigung der Ventilpatrone 9 im Ventilblockaggregats 11 zum Verzicht des aus den vorangegangenen Figuren 3 und 4 dargestellten zweiten Verstemmstelle auf Höhe des Ventilsitzes an der Ventilpatrone 9, um die aus den Fig. 1 und 2 beschriebene Funktion eines Bypasskanals 4 zwischen der Stufenbohrung 10 und der Ventilpatrone 9 zu ermöglichen. Durch dieses in Fig. 5 dargelegte Konzept ergibt sich eine besonders bauraumoptimierte Anordnung des Schließkörpers 1, ohne die Ergänzung von Hohlräumen und Kanäle, wie sie in den vorangegangenen Ausführungsbeispielen nach Fig. 3 und 4 beschrieben wurden. Die druckmitteldichte Befestigung der Ventilpatrone 9 in der Stufenbohrung 10 ist beispielhaft mittels einer einfachen selbsteinscherenden Verbindung dargestellt. Sie kann jedoch bei Wunsch oder Bedarf mittels weiterer, bekannter formschlüssiger und/oder kraftschlüssiger Verbindungsmethoden erfolgen. Hinsichtlich der Funktionsweise des als Ringdichtung ausgeführten Schließkörpers 1 ist wiederum auf eine entsprechende Spielpassung zwischen der Ventilpatrone 9 und der Stufenbohrung 10 im Bereich des Schließkörpers 1 zu achten. Damit ist gewährleistet, daß bei in der Gründstellung geschlossenem Druckmodulationsventil 5 jederzeit sich das zum Evakuieren erforderliche Vakuum des Primärkreises 2 entlang der Ventilpatrone 9 und am zunächst quellfreien Schließkörper 1 vorbei in den unterhalb der Ventilpatrone 9 gelegenen Hohlraum 21 fortpflanzen kann, der mit dem Sekundärkreis 3 in Verbindung steht. Soweit nicht auf alle in Fig. 5 gezeigten Details eingegangen wurde, sind diese teilweise den voran beschriebenen Fig. 3 und 4 zu entnehmen.

Auf Basis der voranbeschriebenen Ausführungsbeispiele sind eine Reihe von Abwandlungsvarianten der Erfindung möglich, von denen hier nur einige ohne weitere Bezugnahme auf eine Zeichnungsdarstellung kurz eingegangen werden soll. So ist es zum Beispiel möglich, den zu Fig. 4 beschriebenen Erfindungsgegenstand derart zu verändern, daß der den Schließkörper 1 aufnehmende Haltekörper 16 als einstückes Bestandteil der Ventilpatrone 9 ausgebildet ist. In allen bisher beschriebenen Ausführungsformen ist der Schließkörper 1 konstruktiv als im Haltekörper 16 eingefaßte Ringdichtung charakterisiert. Andere Geometrien des Schließkörpers 1 sind jedoch gleichfalls denkbar. Hierzu gehören beispielsweise Schließkörper 1, die die Form einer Axialdichtung oder einer Kugel aufweisen, wodurch sich weitere Ausgestaltungsmöglichkeiten zur Anordnung und zur Halterung des jeweiligen Schließkörpers 1 ergeben. Betrachtet man beispielhaft die Gestaltung des aus Fig. 3 bekannten und mit dem Primärkreis 2 verbundenen Hohlraums 22, so eignet sich dieser beispielsweise zur spielbehafteten Aufnahme eines kugelförmigen, elastomeren Schließkörpers 1, der beispielsweise mittels eines Haltekäfigs im sacklochförmigen Hohlraum 22 gesichert ist. Auch dieser kugelförmige Schließkörper 1 würde während des Evakuiervorganges infolge des Radialspiels in der Stufenbohrung 10 eine Druckmittelverbindung zum Sekundärkreis 3 herstellen, der sich in den Bereich des an der Ventilpatrone 9 gehaltenen Plattenfilters erstreckt. Ein nachfolgendes Befüllen des Primärkreises 2 mit Bremsflüssigkeit hätte sodann eine Quellwirkung des kugelförmigen Schließkörper 1 zum Zwecke einer Unterbrechung des aus Fig. 1 und 2 bekannten Bypasskanals zur Folge. Ergänzend zur Ausführungsform nach Fig. 5 wird auf den Sachverhalt verwiesen, daß der Schließkörper 1 alternativ zur Anordnung an der Ventilpatrone 9 ebenso in einer Ringnut der Stufenbohrung 10 gehalten werden kann.

### Bezugszeichenliste

- 1: Schließkörper
- 2: Primärkreis
- 3: Sekundärkreis
- 4: Bypasskanal
- 5: Druckmodulationsventil
- 6: Rückförderpumpe
- 7: Druckmodulationsventil
- 8: Bremsdruckgeber
- 9: Ventilpatrone
- 10: Stufenbohrung
- 11: Ventilblockaggregat
- 12: Radbremse
- 13: Druckmodulationsventil
- 14: Niederdruckspeicher
- 15: Geräuschdämpfungseinrichtung
- 16: Haltekörper
- 17: Rückschlagventil
- 18: Saugventil
- 19: Druckventil
- 20: 2/2 Wegeventil
- 21: Hohlraum
- 22: Hohlraum
- 23: Querbohrung
- 24: Ringfilter

## Patentansprüche

1. Hydraulische Kraftfahrzeugbremsanlage mit Radschlupfregelung nach dem Rückförderprinzip, mit einem die Druckmittelverbindung zwischen einem Bremsdruckgeber (8) und wenigstens einer Radbremse (12) herstellenden Primärkreis (2), sowie mit einem von der oder den Radbremsen (12) in der bremslöse- und schlupffreien Normalbremsstellung getrennten Sekundärkreis (3), der wenigstens ein in der Grundstellung geschlossenes Druckmodulationsventil (5) und einen zu einer Rückförderpumpe (6) führenden Druckmittelpfad aufweist, wobei ein Schließkörper (1) beim Evakuieren der Bremsanlage den Sekundärkreis (3) mit dem Primärkreis (2) verbindet, **dadurch gekennzeichnet, daß** der Schließkörper (1) aus einem Werkstoff besteht, der unter Einwirkung von Bremsflüssigkeit eine Form- und/oder Volumenänderung derart vollzieht, daß nach dem Evakuieren und Befüllen der Bremsanlage mit Bremsflüssigkeit der Primärkreis (2) vom Sekundärkreis (3) unterbrochen ist.

2. Hydraulische Kraftfahrzeugbremsanlage nach Anspruch 1, **dadurch gekennzeichnet, daß** der Schließkörper (1) aus einem Quellwerkstoff besteht.

3. Hydraulische Kraftfahrzeugbremsanlage nach Anspruch 1 oder 2, **dadurch gekennzeichnet, daß** der Schließkörper (1) in einem Bypasskanal (4) zum in Grundstellung geschlossenen Druckmodulationsventil (5) angeordnet ist.

4. Hydraulische Kraftfahrzeugbremsanlage nach einem der vorhergehenden Ansprüche, **dadurch gekennzeichnet, daß** der Schließkörper (1) in einen Bypasskanal(4'') zur Rückförderpumpe (6) angeordnet ist.

5. Hydraulische Kraftfahrzeugbremsanlage nach einem der vorhergehenden Ansprüche, **dadurch gekennzeichnet, daß** der Schließkörper (1) in einem Bypasskanal (4''') zu einem in Grundstellung geschlossenen Druckmodulationsventil (7) angeordnet ist, das bei einem automatischen Bremseneingriff eine Druckmittelverbindung zwischen dem Bremsdruckgeber (8) und der Saugseite der Rückförderpumpe (6) herstellt.

6. Hydraulische Kraftfahrzeugbremsanlage nach einem der vorhergehenden Ansprüche, **dadurch gekennzeichnet, daß** der Schließkörper (1) in einem Bypasskanal (4'') angeordnet ist, der sich stromabwärts zum Druckmodulationsventil (7) von der Saugseite zur Druckseite der Rückförderpumpe (6) erstreckt.

7. Hydraulische Kraftfahrzeugbremsanlage nach Anspruch 1, **dadurch gekennzeichnet, daß** der Schließkörper (1) an einer das Druckmodulationsventil (5;7) tragenden Ventilpatrone (9) angeordnet ist.

8. Hydraulische Kraftfahrzeugbremsanlage nach Anspruch 1, **dadurch gekennzeichnet, daß** der Schließkörper (1) in einer Stufenbohrung (10) eines das Druckmodulationsventil (5;7) aufnehmenden Ventilblockaggregates (11) positioniert ist.

9. Hydraulische Kraftfahrzeugbremsanlage nach mindestens einem der vorhergehenden Ansprüche 1 bis 8, **dadurch gekennzeichnet, daß** der Schließkörper (1) aus einem Elastomer, vorzugsweise Epichlorhydrin-Kautschuk oder Acrylnitril-Butadien-Kautschuk besteht.

10. Hydraulische Kraftfahrzeugbremsanlage nach mindestens einem der vorhergehenden Ansprüche 1 bis 9, **dadurch gekennzeichnet, daß** der Schließkörper (1) als Radial- oder Axialdichtung ausgeführt ist.

11. Hydraulische Kraftfahrzeugbremsanlage nach Anspruch 1, **dadurch gekennzeichnet, daß** der Schließkörper (1) als Kugelkörper gestaltet ist, der vorzugsweise in einer Stufenbohrung (10) eines Ventilblockaggregates (11) positioniert ist, die sowohl eine hydraulische Verbindung zum Primär- als auch Sekundärkreis (2,3) aufweist.

## Claims

1. Automotive vehicle hydraulic brake system with wheel slip control in accordance with the principle of recirculation, with a primary circuit (2) establishing a pressure medium connection between a braking pressure generator (8) and at least one wheel brake (12), as well as with a secondary circuit (3) separated from the wheel brake or wheel brakes (12) in the brake release position and in the slip-free normal braking position and at least including one pressure modulating valve (5) closed in the basic position and one pressure medium path leading to a recirculating pump (6), wherein a closure member (1) connects the secondary circuit (3) with the primary circuit (2) upon the evacuation of the brake system, **characterized in that** the closure member (1) consists of a material which, under the action of brake fluid, performs a change of shape and/or in volume so that, after evacuation and filling of the brake system with brake fluid, the primary circuit (2) is separated from the secondary circuit (3).

2. Automotive vehicle hydraulic brake system as claimed in claim 1, **characterized in that** the closure member (1) consists of a swelling material.

3. Automotive vehicle hydraulic brake system as claimed in claim 1 or in claim 2, **characterized in that** the closure member (1) is disposed in a bypass channel (4) bypassing the pressure modulating valve (5) closed in the basic position.

4. Automotive vehicle hydraulic brake system as claimed in anyone of the preceding claims, **characterized in that** the closure member (1) is disposed in a bypass channel (4'') bypassing the recirculating pump (6).

5. Automotive vehicle hydraulic brake system as claimed in anyone of the preceding claims, **characterized in that** the closure member (1) is disposed in a bypass channel (4''') bypassing a pressure modulating valve (7) closed in the basic position and establishing a pressure medium connection between the braking pressure generator (8) and the suction side of the recirculating pump (6) upon an automatic brake intervention.

6. Automotive vehicle hydraulic brake system as claimed in anyone of the preceding claims, **characterized in that** the closure member (1) is disposed in a bypass channel (4'') extending downstream of the pressure modulating valve (7) from the suction side to the delivery side of the recirculating pump (6).

7. Automotive vehicle hydraulic brake system as claimed in claim 1, **characterized in that** the closure member (1) is disposed on a valve cartridge (9) carrying the pressure modulating valve (5;7).

8. Automotive vehicle hydraulic brake system as claimed in claim 1, **characterized in that** the closure member (1) is positioned within a stepped bore (10) of a valve block unit (11) receiving the pressure modulating valve (5;7).

9. Automotive vehicle hydraulic brake system as claimed in at least one of the preceding claims 1 through 8, **characterized in that** the closure member (1) is made of an elastomer, preferably of epichlorohydrine caoutchouc or acrylnitrile butadiene caoutchouc.

10. Automotive vehicle hydraulic brake system as claimed in at least one of the preceding claims 1 through 9,
**characterized in that** the closure member (1) is constructed as a radial seal or an axial seal.

11. Automotive vehicle hydraulic brake system as claimed in claim 1, **characterized in that** the closure member (1) is shaped as a ball body preferably positioned within a stepped bore (10) of a valve block unit (11) which has a hydraulic connection towards both the primary and secondary circuits (2,3).

## Revendications

1. Dispositif de freinage hydraulique pour véhicule automobile, à régulation du glissement de roue conformément au principe de retour, comprenant un circuit primaire (2), produisant la liaison d'agent de pression entre un générateur de pression de frein (8) et au moins un frein de roue (12), et un circuit secondaire (3) qui est séparé du ou des freins de roue (12) dans la position de freinage normal à frein relâché et sans glissement et qui comporte au moins une valve de modulation de pression (5) fermée dans la position de base et un trajet d'agent de pression menant à une pompe de retour (6), un corps de fermeture (1) reliant le circuit secondaire (3) au circuit primaire (2) lorsque le dispositif de freinage est mis en dépression, **caractérisé en ce que** le corps de fermeture (1) est constitué d'une matière qui, sous l'action du liquide de frein, est l'objet d'une modification de forme et/ou de volume d'une manière telle qu'une fois le dispositif de frein mis en dépression et rempli de liquide de frein, le circuit primaire (2), la communication est interrompue entre le circuit primaire (2) et le circuit secondaire (3) .

2. Dispositif de freinage hydraulique pour véhicule automobile suivant la revendication 1, **caractérisé en ce que** le corps de fermeture (1) est en une matière susceptible de gonflement.

3. Dispositif de freinage hydraulique pour véhicule automobile suivant la revendication 1 ou 2, **caractérisé en ce que** le corps de fermeture (1) est disposé dans un conduit de dérivation (4) dérivant par rapport à la valve de modulation de pression (5) fermée en position de base.

4. Dispositif de freinage hydraulique pour véhicule automobile suivant l'une des revendications précédentes, **caractérisé en ce que** le corps de fermeture (1) est disposé dans un conduit de dérivation (4") dérivant par rapport a la pompe de retour (6).

5. Dispositif de freinage hydraulique pour véhicule automobile suivant l'une des revendications précédentes, **caractérisé en ce que** le corps de fermeture (1) est disposé dans un conduit de dérivation (4'") dérivant par rapport à une valve de modulation de pression (7), fermée en position de base, qui produit, lors d'une intervention automatique de freinage, une liaison d'agent de pression entre le générateur de pression de frein (8) et le côté aspiration de la pompe de retour (6).

6. Dispositif de freinage hydraulique pour véhicule automobile suivant l'une des revendications précédentes, **caractérisé en ce que** le corps de fermeture (1) est disposé dans un conduit de dérivation (4") qui s'étend, en aval vis-à-vis de la valve de modulation de pression (7), du côté admission vers le côté refoulement de la pompe de retour (6).

7. Dispositif de freinage hydraulique pour véhicule automobile suivant la revendication 1, **caractérisé en ce que** le corps de fermeture (1) est disposé sur une cartouche de valve (9) portant la valve de modulation de pression (5 ; 7).

8. Dispositif de freinage hydraulique pour véhicule automobile suivant la revendication 1, **caractérisé en ce que** le corps de fermeture (1) est positionné dans un alésage étagé (10) d'un ensemble de bloc de valve (11) logeant la valve de modulation de pression (5 ; 7).

9. Dispositif de freinage hydraulique pour véhicule automobile suivant au moins l'une des revendications précédentes 1 à 8, **caractérisé en ce que** le corps de fermeture (1) est constitué d'un élastomère, de préférence d'un caoutchouc d'épichlorhydrine ou un caoutchouc acrylonitrile-butadiène.

10. Dispositif de freinage hydraulique pour véhicule automobile suivant au moins l'une des revendications précédentes 1 à 9, **caractérisé en ce que** le corps de fermeture (1) est réalisé sous forme d'une garniture d'étanchéité radiale ou axiale.

11. Dispositif de freinage hydraulique pour véhicule automobile suivant la revendication 1, **caractérisé en ce que** le corps de fermeture (1) est conformé à la façon d'un corps sphérique qui est de préférence positionné dans un alésage étagé (10) d'un ensemble de bloc de valve (11) qui comporte une liaison hydraulique aussi bien vis-à-vis du circuit primaire que du circuit secondaire (2, 3).
